# EUROPÄISCHE PATENTANMELDUNG

(11) **EP 3 165 578 A1**
(43) Veröffentlichungstag der Anmeldung: **10.05.2017**
(21) Anmeldenummer: 15003202.7
(22) Anmeldetag: 09.11.2015
(51) Int. Cl.: C09D 11/037, C09B 67/00

(54) **METALLISCHE OFFSETDRUCKFARBE MIT SPIEGELGLANZ UND DRUCKVERFAHREN**

(71) Anmelder: Eckart GmbH, 91235 Hartenstein (DE)
(72) Erfinder: Becker, Michael, 91207 Lauf (DE); Reitzenstein, Dörte, 91207 Lauf (DE); Lindl, Alexandra, 91220 Schnaittach (DE); Plitzko, Yvonne, 90480 Nürnberg (DE)
(74) Vertreter: Henglein, Frank Arwed

(57) **Zusammenfassung**

Die Erfindung handelt von einer Offsetdruckfarbe enthaltend plättchenförmige Aluminiumpigmente mit einer mittleren Dicke h₅₀ aus einem Bereich von 15 bis 80 nm sowie Bindemittel und Lösemittel,
dadurch gekennzeichnet, dass die plättchenförmigen Aluminiumpigmente durch PVD-Verfahren hergestellt werden und mindestens teilweise mit einem leafing Additiv beschichtet sind und dass die Offsetdruckfarbe eine Viskosität von 4 bis 15 Pa s, gemessen an der auf 25°C temperierten Probe mit Hilfe eines Rotationsviskosimeter mit einer Kegel-Platte-Geometrie bei einer Schubspannung von 185,9 Pa, aufweist.

Ferner handelt die Erfindung von einem Verfahren zur Herstellung eines hochglänzenden metallischen Druckbildes auf einem Substrat, umfassend die folgende Schritte
a) optional Aufbringen eines Primers auf dem Substrat
b) Aufbringen einer erfindungsgemäßen Offsetdruckfarbe auf die Primerschicht oder auf dem Substrat unter Ausbildung einer hochglänzenden Druckschicht B
c) optional Aufbringen weiterer Farbschichten C auf die Schicht B.

## Beschreibung

Die vorliegende Erfindung handelt von Offsetdruckfarben enthaltend Metalleffektpigmente mit hohem Spiegelglanz, Verfahren zur Herstellung der Druckfarbe und Verfahren zum Verdrucken der Offsetdruckfarbe.

Metallpigmenthaltige Offsetdruckfarben sind seit längerem bekannt. So offenbaren beispielsweise die JP 04119594 B2 sowie die JP 2007021736 A lösemittelbasierende Offsetdruckfarben, die u.a. konventionelle Aluminiumeffektpigmente enthalten können.

Die bekannten Metallpigmenthaltigen Offsetdruckfarben weisen jedoch im Gegensatz zu beispielsweise Flexofarben, Tiefdruckfarben oder Siebdruckfarben keinen sehr hohen Spiegelglanz auf.

Die WO 2013/119387 A1 offenbart UV-härtende Offset Druckfarben, die PVD-Metallpigmente enthalten und einen relativ hohen Glanz aufweisen. Diese Druckfarben lassen sich jedoch nicht für den konventionellen Offsetdruck verwenden. UV-härtende Farben weisen den Nachteil auf, dass bei einer nicht vollständigen Polymerisation Reste an toxikologisch bedenklichen Monomeren im Druckerzeugnis verbleiben. Dies steht dem zunehmenden Bedürfnis an migrationsarmen Druckfarben entgegen.

Aufgabe der vorliegenden Erfindung war es, eine konventionelle Offsetdruckfarbe bereitzustellen, die einen gegenüber dem Stand der Technik verbesserten metallischen Spiegelglanz aufweist. Die erfindungsgemäße Offsetdruckfarbe soll dabei in anderen anwendungstechnisch relevanten Eigenschaften keine Nachteile aufweisen. So sollten beispielsweise eine gute Verdruckbarkeit sowie die Überdruckbarkeit gegeben sein und kein "Nebeln" auftreten.

Weiterhin besteht eine Aufgabe, ein Verfahren zur Herstellung der Offsetdruckfarbe bereit zu stellen.

Weiterhin besteht eine Aufgabe, ein bedrucktes Substrat mit Spiegelglanz bereit zu stellen.

Weiterhin besteht eine Aufgabe der vorliegenden Erfindung darin, ein Druckverfahren zur Erzeugung eines metallischen Spiegeleffekts bereit zu stellen.

Die gestellten Aufgaben wurden gelöst durch Bereitstellung einer Offsetdruckfarbe enthaltend plättchenförmige Aluminiumpigmente mit einer mittleren Dicke h₅₀ aus einem Bereich von 15 bis 80 nm sowie Bindemittel und Lösemittel, dadurch gekennzeichnet, dass die plättchenförmigen Aluminiumpigmente durch PVD-Verfahren hergestellt werden und mindestens teilweise mit einem leafing Additiv beschichtet sind und dass die Offsetdruckfarbe eine Viskosität von 4 bis 15 Pa s, gemessen an der auf 25°C temperierten Probe mit Hilfe eines Rotationsviskosimeter mit einer Kegel-Platte-Geometrie bei einer Schubspannung von 185,9 Pa, aufweist.

Die Unteransprüche 2 bis 11 enthalten bevorzugte Ausführungsformen der Offsetdruckfarbe.

Die gestellte Aufgabe wurde weiterhin gelöst durch Bereitstellung eines Verfahrens zur Herstellung einer erfindungsgemäßen Offsetdruckfarbe, wobei das Verfahren folgende Schritte umfaßt:
a) Bereitstellen eines OffsetFirnises durch Vermischen und Erhitzen von Bindemitteln und Lösemitteln,
b) Bereitstellen einer Paste mit PVD-Aluminiumeffektpigmenten, die eine mittlere Dicke h₅₀ von 15 bis 80 nm aufweisen und mit einem leafing Additiv beschichtet sind
c) Zugabe weiterer Lösemittel und optional weiterer Additive zum Firnis a) sowie Vermischen mit der PVD-Aluminiumpigmentpaste b)
d) Einstellen der Viskosität in einem Bereich von 4 bis 15 Pa s, wobei die Viskosität bevorzugt durch Zugabe von Lösemittel eingestellt wird und wobei die Viskosität an der auf 25°C temperierten Probe mit Hilfe eines Rotationsviskosimeter mit einer Kegel-Platte-Geometrie bei einer Schubspannung von 185,9 Pa gemessen wird,
d) optional Altern der Offsetdruckfarbe, bis sie eine Viskosität in einem Bereich von 4,0 bis 12 Pa s erreicht hat.

Die gestellte Aufgabe wurde weiterhin gelöst durch Bereitstellung eines bedruckten Substrats mit metallischem Spiegelglanz, umfassend
a) optional eine Primerschicht A
b) eine durch Offsetdruck aufgebrachte Schicht B unter Verwendung einer erfindungsgemäßen Offsetdruckfarbe, die gegebenenfalls auf der Primerschicht A aufgebracht ist,
c) optional weitere Farbschichten C.

Unteransprüche 14 bis 16 enthalten bevorzugte Ausführungsformen des bedruckten Substrats.

Schließlich wurde die gestellte Aufgabe gelöst durch Bereitstellung eines Verfahrens zur Herstellung eines bedruckten Substrats mit metallischem Spiegelglanz,
umfassend die folgende Schritte:
a) optional Aufbringen eines Primers auf dem Substrat
b) Aufbringen einer erfindungsgemäßen Offsetdruckfarbe auf die Primerschicht oder auf dem Substrat unter Ausbildung einer hochglänzenden Druckschicht B
c) optional Aufbringen weiterer Farbschichten auf die Schicht B.

Unteransprüche 18 bis 20 enthalten bevorzugte Ausführungsformen dieses Verfahrens.

Die Erfindung handelt von einer Offsetdruckfarbe enthaltend plättchenförmige Aluminiumpigmente mit einer mittleren Dicke h₅₀ aus einem Bereich von 15 bis 80 nm sowie Bindemittel und Lösemittel, dadurch gekennzeichnet, dass die plättchenförmigen Aluminiumpigmente durch PVD-Verfahren hergestellt werden und mindestens teilweise mit einem leafing Additiv beschichtet sind und dass die Offsetdruckfarbe eine Viskosität von 4 bis 15 Pa s, gemessen an der auf 25°C temperierten Probe mit Hilfe eines Rotationsviskosimeter mit einer Kegel-Platte-Geometrie bei einer Schubspannung von 185,9 Pa, aufweist.

Es wurde völlig überraschend festgestellt, dass die erfindungsgemäßen Offsetdruckfarben sehr niedrige Viskositäten aufweisen, die im Offsetdruck normalerweise nicht üblich sind. Offsetdruckfarben sind bekanntermaßen recht zähflüssig, da im Offsetdruck der Weg der Druckfarbe vom Farbkasten zum Druckbild ein sehr langer ist. Nur mit diesen niedrig-viskosen Offsetdruckfarben konnte ein befriedigender Spiegelglanz erreicht werden. Die gewöhnlich im Stand der Technik aufgeführten Nachteile niedrig viskoser Offsetdruckfarben wie ""Nebeln", unzureichende Wischfestigkeit, schlechte Punktschärfe oder auch unerwünschtes Tropfen der Druckfarbe aus dem Farbkasten konnten überraschenderweise nicht bestätigt werden. Die erfindungsgemäßen Offsetdruckfarben weisen eine Viskosität aus einem Bereich von 4 bis 15 Pa s, bevorzugt aus einem Bereich von 4,1 bis 12 Pa s, weiter bevorzugt aus einem Bereich von 4,2 bis 11 Pa s, besonders bevorzugt aus einem Bereich von 4,3 bis unter 10 Pa s und ganz besonders bevorzugt aus einem Bereich von 4,4 bis unter 9,5 Pa s auf. Weiter bevorzugte Viskositätsbereiche sind 4,0 bis 9,2 Pa s und 4,0 bis 9,0 Pa s.

Hierbei wird die Viskosität bevorzugt gemessen mit einem Rotationsviskosimeter (Typ: Bohlin CVO 100, Fa. Malvern Instruments) mit einer Kegel/Platte Geometrie (Neigungswinkel Kegel: 4°, Kegeldurchmesser: 40 mm) bei 25 °C Probentemperatur. Als Viskositätswert wird hierbei der Wert bei einer Schubspannung von 185,9 Pa verwendet.

Oberhalb einer Viskosität von 15 Pa s konnten keine hochglänzenden Andrucke mit dem gewünschten Spiegeleffekt erzielt werden. Unterhalb einer Viskosität von 4,0 Pa s hingegen kam es zum sogenannten "Nebeln". Hierbei lösen sich kleinste Druckfarbenpartikel beim Rotieren der Walzen der Druckmaschine ab, die sich als Farbnebel nach allen Richtungen verteilen, was zu einer Verschmutzung der Druckmaschine führt. Ferner kann es zu einer starken Verminderung der Punktschärfe und zu unzureichender Wischfestigkeit kommen.

Es war für den Fachmann nicht zu erwarten, in diesem niedrigen Viskositätsbereich mit Metalleffektpigmenten pigmentierte Offsetdruckfarben zu erhalten, die sich einwandfrei verarbeiten lassen und den hohen Spiegeleffekt aufweisen.

Im Rahmen dieser Erfindung wird unter der Viskosität der erfindungsgemäßen Offsetdruckfarbe, jene Viskosität verstanden, die die Druckfarbe vor dem Verdrucken aufweist. Dies wird bei kommerziell gelieferten Produkten häufig eine Druckfarbe sein, die bereits eine gewisse Zeit, beispielsweise zwei bis vier Wochen, nach ihrer Herstellung gealtert ist, da die Druckfarbe erst transportiert werden und gegebenenfalls eine Lagerzeit vor ihrer Verwendung verbringen muss. Die erfindungsgemäßen Offsetdruckfarben weisen überraschenderweise eine Abnahme ihrer Viskosität nach der Herstellung mit der Zeit auf. Typischerweise wird nach ca. ein bis zwei Wochen eine konstante Viskosität erreicht. Dies ist für mit Metallpigmenten pigmentierte Effektoffsetdruckfarben eher ungewöhnlich, da normalerweise ein gewisser Anstieg der Viskosität mit der Zeit beobachtet wird.

Für die plättchenförmigen Aluminiumpigmente ist es erfindungswesentlich, dass die Pigmente durch PVD-Verfahren hergestellt werden. Bei diesem Verfahren wird im Ultrahochvakuum Aluminiumdampf auf ein zuvor mit einem Release-coat versehenes Polymerband, typischerweise ein PET-Band, aufgedampft. Anschließend wird die Metallfolie in einer "Stripping"-Kammer unter Normaldruck in eine Lösemittelbahn überführt. Dabei löst sie sich vom polymeren Untergrund ab und wird zerkleinert. Durch eine anschließende mechanische Behandlung wird die Zerkleinerung forciert und kontrolliert auf gewünschte Pigmentgrößen eingestellt.

Derart hergestellte Aluminiumpigmente sind die optisch hochwertigsten aufgrund ihrer äußerst glatten Oberfläche sowie der beim Zerkleinerungsprozess erzeugten geraden Schnittkanten, die wenig Anlass für unerwünschte Streueffekte für einfallendes Licht geben. Es hat sich gezeigt, dass nur diese Pigmente den gewünschten Spiegeleffekt in den erfindungsgemäßen Offsetdruckfarben zu geben vermögen.

Zwar ist es inzwischen gelungen, auch durch Naßvermahlung Aluminiumeffektpigmente herzustellen, die die mittleren Dicken und teilweise sogar die Dickenverteilungen der PVD-Pigmente aufweisen (EP 2102294 B1, EP 1613702 B1, EP 1621586 B1). Diese Metalleffektpigmente erwiesen sich jedoch nicht als geeignet genug für die erfindungsgemäße Offsetdruckfarbe.

Die mittlere Dicke h₅₀ der PVD-Aluminiumeffektpigmente liegt in einem Bereich von 15 bis 80 nm, bevorzugt in einem Bereich von 20 bis 50 nm und ganz besonders bevorzugt in einem Bereich von 25 bis 40 nm.

Unterhalb von 15 nm werden die Pigmente zunehmend transparent und dunkel, was dem gewünschten Spiegeleffekt abträglich ist. Oberhalb von 80 nm ist die Orientierung der Pigmente nicht optimal, was ebenfalls zu verringerten Glanzwerten führt.

Die mittlere Pigmentdicke wird gemessen mittels Auszählen im REM. Details zu der Messmethode können der EP 1613702 B1 (Absätze [0125] und [0126]) entnommen werden. Der h₅₀-Wert ist hierbei der Wert der Dickensummenverteilung, bei dem 50 % aller Teilchen unterhalb dieser Dicken liegen.

Die mittleren Größen d₅₀ der PVD-Aluminiumeffektpigmente liegen in einem Bereich von 4 bis 15 µm, bevorzugt in einem Bereich von 5 - 13 µm und besonders bevorzugt in einem Bereich von 5,5 - 11 µm. Aluminiumeffektpigmente mit einem d₅₀-Wert oberhalb von 15 µm weisen beim Offsetdruckprozess keinen ausreichenden Transfer auf, während Aluminiumeffektpigmente mit einem d₅₀-Wert unterhalb von 4 µm einen zu dunklen optischen Effekt, der kein Spiegelglanz mehr ist, erzeugen.

Die PVD-Aluminiumpigmente können mit weiteren Beschichtungen wie beispielsweise Metalloxide versehen sein. Bevorzugt ist eine Beschichtung mit SiO₂, die neben verbessertem Korrosionsschutz auch als Ankerschicht für die Modifizierung der Pigmentoberfläche mit leafing Additiven, bevorzugt mit langkettigen Organosilanen fungieren kann.

Die Pigmentierungshöhe der Aluminiumpigmente in der Druckfarbe beträgt 2 bis 8 Gew.-%, bevorzugt 3 bis 7 Gew.-% und besonders bevorzugt 4 bis 6,5 Gew.-%, jeweils bezogen auf das Gesamtgewicht der Offsetdruckfarbe.
Unterhalb von 2 Gew.-% ist die Deckung der Aluminiumpigmente nicht ausreichend, was den Metalleffekt stark vermindert. Oberhalb von 8 Gew.-% wird die Orientierung der Effektpigmente in der gedruckten Offsetdruckfarbe gestört durch eine zunehmende räumliche Einengung und gegenseitige räumliche Behinderung der Pigmente untereinander. Ein stark verminderter Glanz ist hier die Folge.

Bevorzugt enthält die erfindungsgemäße Offsetdruckfarbe keine weiteren Effektpigmente wie Perlglanzpigmente und/oder Interferenzpigmente. Der Zusatz weiterer Effektpigmente wie beispielsweise Perlglanzpigmente würde den erwünschten Spiegelglanz erheblich vermindern. Es ist bevorzugt, dass die erfindungsgemäße Offsetdruckfarbe keine Perlglanzpigmente enthält. Der Zusatz von Buntpigmenten würde zwar, in Abhängigkeit von ihrer Transparenz, zu einem verminderten Spiegelglanz führen. Zudem würde sich kein kräftiger Färbeeffekt einstellen, da die Aluminiumeffektpigmente aufgrund ihres leafings die Buntpigmente weitgehend im Druck - überdecken würden. Es kann jedoch erstrebenswert sein, durch Zusatz geeigneter, vorzugsweise transparenter Buntpigmente, einen eingefärbten Druck mit erheblichem Metalleffekt zu erhalten. So kann beispielsweise durch Zugabe geeigneter gelber und/oder roter transparenter Buntpigmente ein goldener, stark metallischer Druck erzeugt werden.

Als weiterer Pigmentzusatz ist bevorzugt die Beimischung von konventionellen Aluminiumpigmenten, die durch Nassvermahlung hergestellt werden, geeignet. Hierbei sollten die Pigmente bevorzugt eine mittlere Dicke in einem Bereich von 15 - 80 nm und besonders bevorzugt von 20 bis 50 nm aufweisen. Die Herstellung derartiger Pigmente wurden in EP 2102294 B1, EP 1613702 B1 oder EP 1621586 B1 beschrieben, die hiermit unter Bezugnahme aufgenommen sind.

Die Menge dieses Pigmentzusatzes sollte 40 Gew.-%, bevorzugt 20 Gew.-%, bezogen auf die Gesamtmenge der Pigmente, nicht überschreiten.

Gegenstand der Erfindung sind ölbasierende Offsetdruckfarben. Die erfindungsgemäßen Offsetdruckfarben sind nicht UV-härtbar.

Die Lösemittel für die erfindungsgemäßen Offsetdruckfarben sind der Gruppe bestehend aus Mineralölen, Pflanzenölen und Fettsäureestern oder Mischungen daraus, entnommen. Hierbei werden Pflanzenöle jedoch nicht ohne mindestens eines der jeweils anderen beiden Lösemittel verwendet.

Als Pflanzenöle geeignet sind Öle und davon abgeleitete Polyester auf der Basis von Leinöl, Sojaöl, Sonnenblumenöl, Maiskeimöl, Traubenöl, Safloröl, Tallöl, Baumwollsaatöl, Ricinusöl, Holzöl, Oiticicaöl oder Perillaöl oder Mischungen hiervon.

Es können auch synthetische Pflanzenöle verwendet werden, wie sie beispielsweise in der EP 0 886 671 B1 offenbart sind.

Fettsäureester sind Verbindungen aus Mono-, Di- oder Triglyceride und langkettigen Fettsäuren. Bevorzugt sind Fettsäureester, bei der die verwendeten Fettsäuren eine Kohlenstofflänge von 6 - 26 C-Atomen aufweisen. Bei den Fettsäuren kann es sich um gesättigte oder ungesättigte Fettsäuren handeln. Beispiele für Fettsäuren sind: Octandecensäure, Linolsäure, Linolensäure, Eleastearinsäure, Tetradecensäure, Hexadecensäure, Octandecansäure, Aracinsäure, Dodecansäure, Hexansäure, Octansäure, Decansäure und Dodecensäuren.

Beispielsweise können als Fettsäureester Isopropyllaurat (IPL) oder Pentaerythrittetraoctoat (PTO) verwendet werden.

Der Lösemittelgehalt der die erfindungsgemäßen Offsetdruckfarben liegt in einem Bereich von 40 bis72 Gew.-% und bevorzugt in einem Bereich von 43 bis 68 Gew.-% und ganz besonders bevorzugt in einem Bereich von 45 bis 60 Gew.-% jeweils bezogen auf die gesamte Offsetdruckfarbe.

Als leafing Additiv kommt erfindungsgemäß prinzipiell jede Verbindung in Frage, die imstande ist, einen leafing-Effekt der Aluminiumpigmente in einem Offsetdruck zu erzeugen. Unter leafing versteht man üblicherweise das Aufschwimmen der plättchenförmigen Aluminiumpigmente im Anwendungsmedium. Durch das Anreichern an der Oberfläche findet eine sehr gute planparallele Orientierung der Aluminiumpigmente im Druck statt, was einen hohen Glanz ermöglicht.

Bevorzugt ist das leafing Additiv eine organische Phosphor-haltige Verbindung, die
a) Phosphorsäuren oder Phosphorsäureester mit der allgemeinen Formel (I)

   (O)P(OR¹)(OR²)(OR³) (I)

   und/oder
b) Phosphonsäuren oder Phosphonsäureester der allgemeinen Formel (II)

   (O)PR⁴(OR¹)(OR²) (II)

   und/oder
c) Phosphinsäure oder Phosphinsäureester der allgemeinen Formel (III)

   (O)PR⁴R⁵(OR¹) (III)
sein. Hierbei sind R¹, R² und R³ unabhängig voneinander H oder eine verzweigte oder unverzweigte Alkyl-, Aryl-, Alkylaryl-, Arylalkylgruppe mit 1 bis 30 C-Atomen, die optional Heteroatome wie O, S, und/oder N enthält, mit der Maßgabe, dass im Fall einer Verbindung der Formel (I) mindestens einer dieser Reste eine verzweigte oder unverzweigte Alkyl-, Aryl-, Alkylaryl-, Arylalkylgruppe mit 8 bis 30 C-Atomen ist. Besonders bevorzugt sind verzweigte oder unverzweigte Alkylreste ohne Heteroatome.
R⁴ und R⁵ sind unabhängig voneinander eine verzweigte oder unverzweigte Alkyl-, Aryl-, Alkylaryl-, Arylalkylgruppe mit 8 bis 30 C-Atomen ist, die optional Heteroatome wie O, S, und/oder N enthält. Besonders bevorzugt sind verzweigte oder unverzweigte Alkylreste ohne Heteroatome.

Weiterhin können die leafing Additive eine Verbindung der allgemeinen Formel (IV)

R⁶-X (IV)

sein, wobei R⁶ ein aliphatischer, bevorzugt unverzweigter, Alkylrest mit 12 bis 30 C-Atomen ist und wobei X eine Carboxylgruppe oder eine Carboxylatgruppe, eine Aminogruppe oder ein Trialkoxysilan ist.

Besonders bevorzugt sind bei Verbindungen der Formeln (II), (III) oder (IV) die leafing Additive R⁴, R⁵ und R⁶ unabhängig voneinander eine verzweigte oder unverzweigte Alkyl-, Aryl-, Alkylaryl-, Arylalkylgruppe mit 14 bis 20 C-Atomen ist.

In weiteren bevorzugten Ausführungsformen ist das leafing Additiv:
i) eine Phosphonsäure, wobei R¹= R²= H und R⁴ eine verzweigte oder unverzweigte Alkyl-, Aryl-, Alkylaryl-, Arylalkylgruppe mit 8 bis 18 C-Atomen ist oder
ii) ein Phosphorsäureester ist, wobei mindestens einer der Reste R¹, R², R³ eine verzweigte oder unverzweigte Alkylgruppe mit 8 bis 18 C-Atomen ist
   oder
iii) eine Carbonsäuren gemäß Formel (IV) ist, die der Gruppe bestehend aus Stearinsäure, Ammoniumstearat, Alkalistearat, Erdalkalistearat oder Mischungen hiervon.

Als phosphorhaltige leafing Additive können z.B. verwendet werden:
Octadecylphosphorsäureester (Hordaphos MDST, Fa. Clariant), Phosphorsäuremonocetylester (Hostaphat CC 100), Stearylphosphonsäure, Laurylphosphonsäure, Oktanphosphonsäure oder Mischungen hieraus.

Als Carbonsäuren wird bevorzugt Stearinsäure verwendet. Als Silane werden bevorzugt, Dynasylan 9116, Dynasylan OCTEO oder Dynasylan OCTMO verwendet (Fa. Evonik). ,

Im Rahmen dieser Erfindung werden unter dem Begriff "Bindemittel" jene Harze, die die Trocknung und Verfestigung der Metalleffektpigmentdruckfarbe bewirken, verstanden. Es werden hier nicht die ölartigen Lösemittel hinzugezählt.

Bei dem Bindemittel der erfindungsgemäßen Offsetdruckfarbe handelt es sich bevorzugt um Alkydharze, modifizierte Kolophoniumharze, Maleinatharze, aromatische Kohlenwasserstoffharze, modifizierte Kohlenwasserstoffharze, Allylester mehrwertiger organischer Säuren, Polyallylether und deren Mischungen.

Allylester mehrwertiger organischer Säuren und Polyallylether sind in EP 0 886 671 B1 beschrieben, die hiermit unter Bezugnahme aufgenommen ist. Diese Bindemittel sind besonders gut geeignet für die Formulierung migrationsarmer Offsetdruckfarben.

Besonders bevorzugte Bindemittel sind solche, die auf nachwachsenden Rohstoffen basieren, wie Alkydharze, modifizierte Kolophoniumharze, aromatische Kohlenwasserstoffharze, modifizierte Kohlenwasserstoffharze und Mischungen hieraus.

Als modifizierte Kolophoniumharze eignen sich beispielsweise solche, die mit Acrylsäure oder Maleinsäure modifiziert sind.

Der Gehalt der Bindemittel in den erfindungsgemäßen Offsetdruckfarben liegt bevorzugt in einem Bereich von 22 bis 55 Gew.-%, besonders bevorzugt in einem Bereich von 24 bis 50 Gew.-%, und ganz besonders bevorzugt in einem Bereich von 28 bis 43 Gew.-%, jeweils bezogen auf die gesamte Offsetdruckfarbe.
Oberhalb eines Gehalts von 55 Gew.-% ist es kaum noch möglich, den gewünschten Spiegeleffekt zu erzielen. Unterhalb von 22 Gew.-% Bindemittelgehalt weisen die Offsetdrucke eine zu geringe Filmfestigkeit auf.

Weiterhin enthält die erfindungsgemäße Offsetdruckfarbe weitere Additive wie beispielsweise Trockenmittel, Wachse, Filmbildehilfsmittel, Antioxidantien, Dispergierhilfsmittel und deren Mischungen.
Trockenmittel sind meist Katalysatoren für die Vernetzung der ungesättigten Bindungen der Bindemittel. Hierbei handelt es sich beispielsweise um Mangansalze, Kobaltsalze oder Eisensalze von Fettsäuren und Mischungen hiervon.

Wachse bewirken u.a. eine verbesserte Scheuer- und Kratzfestigkeit der bedruckten Oberflächen.
Beispiele hierfür sind Polyethylenwachse, Candelillawachs, Carnaubawachs, mikrokristallines Wachs, PTFE-Wachse oder Mischungen hiervon.

Die erfindungsgemäße Offsetdruckfarbe kann auch ein oder mehrere Antioxidantien umfassen. Durch den Zusatz von Antioxidantien kann insbesondere eine unerwünschte Oxidation von ungesättigten Harzsäuren, Harzsäureestern und/oder Fettsäureestern, die in dem oder der Bindemitteln enthalten sind, verhindert oder zumindest reduziert werden.

Die Antioxidantien werden bevorzugt ausgewählt aus Ascorbinsäure, Ascorbylpalmitat, Ascorbylstereat, Isoascorbinsäure, Tocopherolen, Propyl-, Octyl- und Dodecylgallat, tert-Butylhydrochinon, Butylhydroxyanisol, Butylhydroxytoluol und Mischungen hiervon.

Dispergierhilfsmittel sind Tenside, deren pigmentaffinen Köpfe am Pigment, während die langen Ketten in das Dispergiermedium hineinragen. Treffen zwei Pigmentpartikel aufeinander, können ihre Oberflächen nicht aneinander haften bleiben, weil sie von den Tensiden auf Abstand gehalten werden. Diese sterische Stabilisierung verhindert die Bildung von Agglomeraten und sorgt für eine homogene Verteilung der Einzelpigmente in der Druckfarbe.

Die, in die Flüssigphase ragenden Ketten setzen außerdem die Oberflächen- und Grenzflächenspannung herab und ermöglichen dadurch eine gute Benetzung der Pigmentoberfläche mit der Flüssigphase.

Die Güte der Verteilung von Metallpigmenten in einer Druckfarbe ist entscheidend für die Qualität und Stabilität dieser.

Derartige Dispergierhilfsmittel werden in aller Regel der Druckfarbe während der Rezeptierung zugesetzt im Gegensatz zu den leafing Additiven, die bevorzugt der Metallpigmentpaste zugesetzt werden, da sie auf diese Weise besonders gut auf die Metallpigmentoberfläche aufziehen können.

Beispiele für Dispergierhilfsmittel sind Disperbyk 108, Disperbyk 111 oder Disperbyk 2200 der Fa. Byk Additives & Instruments.

In bevorzugten Ausführungsformen werden der Offsetdruckfarbe keine Rheologieadditive oder nur sehr wenig (< 1 Gew.-%, bevorzugt < 0,3 Gew.-%) zugesetzt, da die erfindungsgemäß sehr niedrige Viskosität bevorzugt über die Lösemittelmenge eingestellt wird.

Diese weiteren Additive liegen bevorzugt in einem Mengenbereich von 1 - 10 Gew.-%, bezogen auf das Gesamtgewicht der Offsetdruckfarbe, vor. Weiter bevorzugt ist ein Mengenbereich von 2 - 8 Gew.-%, und besonders bevorzugt ein Mengenbereich von 3 bis 5 Gew.-%.

Gegenstand der Erfindung ist weiterhin ein Verfahren zur Herstellung der erfindungsgemäßen Offsetdruckfarbe. Dieses Verfahren umfasst folgende Schritte:
a) Bereitstellen eines OffsetFirnises durch Vermischen und Erhitzen von Bindemitteln und Lösemitteln,
b) Bereitstellen einer Paste mit PVD-Aluminiumeffektpigmenten, die eine mittlere Dicke h₅₀ von 15 bis 80 nm aufweisen und mit einem leafing Additiv beschichtet sind
c) Zugabe weiterer Lösemittel und optional weiterer Additive zum Firnis a) sowie Vermischen mit der PVD-Aluminiumpigmentpaste b)
d) Einstellen der Viskosität in einem Bereich von 4 bis 15 Pa s, wobei die Viskosität bevorzugt durch Zugabe von Lösemittel eingestellt wird und wobei die Viskosität an der auf 25°C temperierten Probe mit Hilfe eines Rotationsviskosimeter mit einer Kegel-Platte-Geometrie bei einer Schubspannung von 185,9 Pa gemessen wird,
d) optional Altern der Offsetdruckfarbe, bis sie eine Viskosität in einem Bereich von 4,0 bis 12 Pa s erreicht hat.

Gegenstand der Erfindung ist weiterhin ein bedrucktes Substrat mit metallischem Spiegelglanz, umfassend
a) optional eine Primerschicht A
b) eine durch Offsetdruck aufgebrachte Schicht B unter Verwendung einer Offsetdruckfarbe nach einem der Ansprüche 1 bis 11, die gegebenenfalls auf der Primerschicht A aufgebracht ist,
c) optional weitere Farbschichten C.

Besonders bevorzugt sind hierbei bedruckte Substrate mit einem Primer, da in diesem Fall sich besonders gute Spiegeleffekte erzielen lassen.

Als Primer können im Prinzip sowohl wasserbasierende Systeme als auch konventionelle Systeme verwendet werden. Bevorzugt sind hierbei die konventionellen, lösemittelbasierenden Primersysteme, da sie in der Regel besser verträglich mit der erfindungsgemäßen Offsetdruckfarbe sind.

Der Primer kann auch mit beispielsweise Buntpigmenten pigmentiert sein. In einer ganz besonders bevorzugten Ausführungsform jedoch ist der Primer eine Lasurschicht.

Der Primer kann auf das Substrat lackiert werden oder mittels Druckverfahren aufgebracht werden. So kann der Primer beispielsweise ein Schutzlack sein.

Als Substrate können erfindungsgemäß alle im Offsetdruck üblichen Substrate verwendet werden. So können beispielsweise Papier, Karton (in gebleichter Form und/oder in gestrichener Form), Kunststofffolien, Glas, Keramik, oder Metall bedruckt werden.

Bevorzugte Substrate sind jene auf Basis von Papier oder Karton. Hierbei kann es sich um recycling-Produkte oder Frischfaseroder deren Mischungen handeln.

Gegenstand der Erfindung ist weiterhin ein Verfahren zur Herstellung eines hochglänzenden metallischen Druckbildes auf einem Substrat. Dieses Verfahren umfasst die folgenden Schritte:
a) optional Aufbringen eines Primers auf dem Substrat
b) Aufbringen einer erfindungsgemäßen Offsetdruckfarbe auf die Primerschicht oder auf dem Substrat unter Ausbildung einer hochglänzenden Druckschicht B
c) optional Aufbringen weiterer Farbschichten C auf die Schicht B.

In den meisten Fällen lassen sich bereits sehr gute Spiegelglanzeffekte erzeugen, indem lediglich in einem Schritt die erfindungsgemäße Offsetdruckfarbe auf das Substrat aufgebracht wird.

In bevorzugten Ausführungsformen wird jedoch als erster Schritt a), vor dem Aufbringen der hochglänzenden Druckschicht B, ein Primer auf das Substrat aufgebracht. Mit dieser Vorgehensweise lassen sich besonders gute Spiegeleffekte erzielen. Der Primer gleicht bei rauen Substraten Unregelmäßigkeiten der Oberflächenstruktur aus und schafft somit eine glattere Untergrundstruktur, was der Ausbildung eines Spiegeleffekts mit der erfindungsgemäßen Offsetdruckfarbe entgegen kommt.

Die Aufbringung eines Primer empfiehlt sich ebenfalls bei Verwendung stark saugender Substrate wie beispielsweise Naturpapier oder ungestrichenes Papier oder Karton. In diesem Fall kann das Lösemittel der Druckfarbe teilweise durch das Substrat aufgesaugt werden, was naturgemäß die Viskosität im Druckfilm schlagartig erhöht. Dem zufolge sind die plättchenförmigen Aluminiumpigmente weniger gut in der Lage, eine planparallele Orientierung einzunehmen.

Die erfindungsgemäße Offsetfarbe kann bei Schritt B in einem oder in mehreren Schritten, beispielsweise zwei Schritten, auf das Substrat oder auf den Primer aufgebracht werden. In den meisten Fällen ist es jedoch möglich, dass die erfindungsgemäße Offsetdruckfarbe in einem Schritt aufgebracht wird. Schicht B nur einmal in einem Druckvorgang aufgebracht wird.

Durch das Aufbringen eines zusätzlichen Überdrucklackes, z.B. wässrig oder UV härtend, wird ein Schutz des Druckerzeugnisses, z.B. gegen mechanische Beanspruchung hervorgerufen. Damit kann beispielsweise eine hervorragende Abrieb- und Kratzfestigkeit gegeben werden. Um diverse visuelle Effekte erzielen zu können, werden bei Druckprozessen Techniken, wie Überlappen und Überdrucken mit zusätzlichen Buntfarben herangezogen.

Das Druckverfahren kann als Bogenoffset- oder als Rollenoffsetverfahren durchgeführt werden.

Es stellte sich überraschenderweise heraus, dass auf die Schicht B auch weitere Farbschichten C aufgebracht werden können, ohne dass diese die Haftung verlieren.

Hierbei kann das Aufdrucken mittels eines Offsetfarbwerks oder eines anschließenden Flexofarbwerks inline in einem Druckdurchgang erfolgen. Diese Methode ist besonders kostengünstig. Es kann alternativ die Farbschicht C auch durch ein beliebiges anderes Druckverfahren im offline-Modus in einem zweiten Druckdurchgang nach Trocknung des ersten Drucks aufgebracht werden.

Die weiteren Farbschichten C, bevorzugt eine (Zahl 1) Farbschicht C, können transparent sein. Dies ist der Fall, wenn das Druckbild lediglich einen silbernen Spiegelglanzeffekt erfordert, jedoch die Aluminiumpigmente sich teilweise abwischen lassen. Durch die überdruckte Schicht C erhält der Druck Abriebstabilität.

Verwendet man bei den Druckschichten C jedoch mit Buntpigmenten pigmentierte Druckfarben, so lassen sich äußerst reizvolle Druckeffekte realisieren.

### Experimenteller Teil:

### I Herstellung Offsetdruckfarben:

### Beispiel 1:

### 1a. Herstellung Firnis 1:

Entsprechend der in Tabelle 1 angegebenen Rezeptur wurden die Lösemittel der Position 4 und Position 5 vorgelegt und auf 135°C aufgeheizt. Bei dieser Temperatur wurden die Harze der Positionen 6, 7 und 8 der Mischung beigegeben und weiter erhitzt bis 170°C. Bei dieser Temperatur wurde nach einer Lösungsdauer von 15 Minuten die Positionen 9, 10, 11 und 12 hinzugefügt. Nach vollständiger Homogenisierung wurde der Firnis abgekühlt auf Raumtemperatur.

### 1 b. Herstellung der Pigmentpaste:

Position 2 wurde in Position 3 und zusätzlich 3% Ethylacetat gelöst. Anschließend wurde Position 1 (kommerziell erhältliche Pigmentdispersion Metalure^{®} A-41510 (15 Gew.-%-ige Dispersion eines PVD-Aluminiumpigments in Ethanol, d₅₀ = 10 µm, h₅₀ = 25 nm; Fa. Eckart America; die in Tabelle 1 angegebene Metalure^{®} Menge bezieht sich auf den reinen Aluminiumgehalt der Dispersion) hinzugegeben und unter Rühren homogenisiert. Als letzter Schritt wurden unter Vakuum die Lösemittel Ethylacetat und Ethanol abgedampft.

### 1 c.Offsetdruckfarbe:

Zu dem im ersten Schritt hergestellte Firnis 1 wurden Position 13 und 14 zugegeben und dispergiert. Nach Zugabe der in Schritt 2 hergestellten Pigmentpaste wurde unter Rühren nochmals homogenisiert.

### 1d. Einstellung Druckviskosität:

Die Druckviskosität wurde abschließend mit dem Pflanzenöl Estisol 312 eingestellt. Die Viskosität wurde anhand eines Rotationsviskosimeters (Typ: Bohlin CVO 100, Fa. Malvern Instruments) mit einer Kegel/Platte Geometrie (Neigungswinkel Kegel: 4°, Kegeldurchmesser: 40 mm) vermessen. Hierbei wurde die Meßprobe auf 25 °C temperiert und das Meßprogramm so eingestellt, dass die Schubspannung in einem Bereich von 11,6 bis 744,1 Pa variiert wurde. Als Viskositätswert wurde hierbei der Wert bei einer Schubspannung von 185,9 Pa verwendet.

**Tabelle 1: Rezepturbestandteile Beispiel 1:**

| **Bestandteil Rezeptur** | **Position** | **Einwaage [Gew.-%]** | **Rohstoff Handelsname** | **Hersteller** | **Rezepturbestandteil** | **Rohstoffbeschreibung** |
|---|---|---|---|---|---|---|
| Metallpig mentpaste | 1 | 5,4405 | Metalure^{®} A-41510 | Eckart America | PVD-Aluminiumpigment Dispersion | Aluminium |
| | 2 | 1,0881 | Stearinsäure | HEMA GmbH & Co. KG | leafing Additiv | Stearinsäure |
| | 3 | 5,1714 | PKWF 28/31 AF neu | Halterman | Lösemittel | Mineralöl Aromatenfrei Siedebereich 280-310°C |
| Firnis 1 | 4 | 9,23 | PKWF 28/31 | Haltermann | Lösemittel | Mineralöl Siedebereich 280-310°C |
| | 5 | 5,68 | HOLZÖL | HEMA GmbH & Co. KG | Lösemittel | Holzöl |
| | 6 | 9,94 | Setaprint™ 1856 E | Lawter | Harz | phenolmodifiziertes Kolophoniumharz |
| | 7 | 7,1 | Worlée Petroleumharz SK-150 | Worleé | Harz | aromatisches Kohlenwasserstoffharz; Petroleumharz; modifiziertes KW Harz |
| | 8 | 15,62 | Novarez TA 120 | Rütgers | Harz | Phenol-modifiziertes KW Harz |
| | 9 | 8,52 | SYNTHALA T D 272 | Synthopol | Harz | Alkydharz |
| | 10 | 11,005 | PKWF 28/31 | Haltermann | Lösemittel | Mineralöl Siedebereich 280-310°C |
| | 11 | 2,13 | OPTIFILM ENHANCER 300 | Eastman | Filmbildehilfsmittel | |
| | 12 | 0,71 | PKWF 28/31 | Haltermann | Lösemittel | Mineralöl Siedebereich 280-310°C |
| Offsetdruckfarbe | 13 | 0,65 | Borchers Dry 0411HS | OMG Group | Trockenmittel | Mangancarboxylat gelöst in Fettsäureester |
| | 14 | 17,715 | Estisol 312 | Easti Chem A/S | Lösemittel | Fettsäureester |

| | | | | | | |
|---|---|---|---|---|---|---|
| Summe: **100** | | | | | | |

### Beispiel 2:

### 2a. Herstellung Firnis 2:

Entsprechend der in Tabelle 2 angegebenen Rezeptur wurden die Positionen 4 bis 8 gemischt und auf 170°C erhitzt. Nach einer Kochdauer von 15 Minuten wurde die Mischung auf 150°C abgekühlt und dann die Positionen 9 und 10 hinzugefügt und die Mischung homogenisiert. Dann konnte der Firnis auf Raumtemperatur abgekühlt werden.

### 2b. Herstellung Pigmentpaste:

Es wurde wie bei Beispiel 1 verfahren, jedoch mit den in Tabelle 2 angegebenen Rohstoffmengen.

### 2c. Offsetdruckfarbe:

Zu dem im ersten Schritt hergestellte Firnis 1 wurden Position 11, 12, 13 und 14 zugegeben und dispergiert. Nach Zugabe der in Schritt 2 hergestellten Pigmentpaste wurde unter Rühren nochmals homogenisiert.

### 2d. Einstellung Druckviskosität:

Die Druckviskosität wurde abschließend mit dem Mineralöl eingestellt. Die Messung erfolgte wie im Beispiel 1 beschrieben.

**Tabelle 2: Rezepturbestandteile Beispiel 2:**

| **Bestandteil Rezeptur** | **Position** | **Einwaage [Gew.%]** | **Rohstoff Handelsname** | **Hersteller** | **Rezepturbestandteil** | **Rohstoffbeschreibung** |
|---|---|---|---|---|---|---|
| Metallpigmentpaste | 1 | 8,132 | PKWF 28/31 AF | Fa. Haltermann | Lösemittel | Mineralöl Aromatenfrei Siedebereich 280-310°C |
| | 2 | 5,6544 | Metalure^{®} A41506 | Fa. Eckart America | Pigment | Aluminiumpigmentdispersion |
| | 3 | 1,4136 | RHODAFAC Laurylphosphonsäure | Rhodia | leafing Additiv | Laurylphosphonsäure |
| Firnis 2 | 4 | 7 | PKWF 28/31 | Haltermann | Lösemittel | Mineralöl Siedebereich 280-310°C |
| | 5 | 24,99 | Petroleumharz SK-150 | Worleé | Harz | aromatisches modifiziertes Kohlenwasserstoffharz |
| | 6 | 4,2 | ALPHA-REZ 4700 E KS04 | Hexion | Harz | phenolmodifiziertes Kolophonium-KW-Hybridharz |
| | 7 | 7 | Novarez TA 120 | Rütgers | Harz | Phenolmodifiziertes KW Harz |
| | 8 | 7 | Holzöl | HEMA GmbH & Co. KG | Lösemittel | Holzöl |
| | 9 | 7 | SYNTHALAT D 272 | Synthopol | Harz | Alkvdharz |
| | 10 | 12,25 | PKWF 28/31 | Haltermann | Lösemittel | Mineralöl Siedebereich 280-310°C |
| Offsetdruckfarbe | 11 | 5 | Worleékyd S23 | Worleé | Harz | Alkvdharz |
| | 12 | 0,5 | Borchers Dry 0411 HS | OMG Group | Trockenmittel | Mangancarboxylat gelöst in Fettsäureester |
| | 13 | 2,5 | Minerpol 221 | BYK | Wachs | |
| | 14 | 7,36 | PKWF 28/31 AF neu | Haltermann | Lösemittel | Mineralöl Aromatenfrei Siedebereich 280-310°C |

| | | | | | | |
|---|---|---|---|---|---|---|
| **Summe: 100** | | | | | | |

Weitere erfindungsgemäße Beispiele sowie Vergleichsbeispiele wurden gemäß der Vorgehensweise von Beispiel 1 oder 2 hergestellt unter Variation diverser Rohstoffe. Einzelheiten hierzu können Tabelle 4 und 5 entnommen werden. Dort aufgeführt sind auch die gemessenen Viskositäten unmittelbar nach dem Ansetzen der Offsetdruckfarbe sowie nach vier Wochen Lagerzeit bei Raumtemperatur (RT). Üblicherweise zeigen die erfindungsgemäßen Offsetdruckfarben einen Abfall der Viskosität nach einer gewissen Lagerzeit.

Als weiterer Firnis 3 wurde ein migrations- und geruchsarmer Firnis verwendet, dessen Zusammensetzung in Tabelle 4 dargestellt ist..

**Tabelle 3: Rezeptur Firnis 3**

| **Bestandteil Rezeptur** | **Position** | **Ein-waage [Gew.-%]** | **Rohstoff Handelsname** | **Hersteller** | **Rezepturbestandteil** | **Rohstoffbeschreibung** |
|---|---|---|---|---|---|---|
| Firnis 3 | 1 | 53,02 | Texaprint SPOC | Coqnis | Lösemittel | Fettsäureester, Pentaerythritol tetraoctanoate |
| | 2 | 25,12 | Setaprint 3450E | Lawter | Harz | Phenolmodifiziertes Kolophoniumharz |
| | 3 | 10,22 | Jonrez IM 816 | WestRock | Harz | Maleinmodifiziertes Kolophoniumharz |
| | 4 | 6,98 | Kristalex F100 | Eastman | Harz | Kohlenwasserstoffharz |
| | 5 | 4,66 | Texaprint SPOC | Cognis | Lösemittel | Fettsäureester, Pentaerythritol tetraoctanoate |

| | | | | | | |
|---|---|---|---|---|---|---|
| **Summe: 100** | | | | | | |

Erfindungsgemäße Beispiele sind in Tabelle 4 dargestellt. Bei Beispiel 8 wurde das PVD-Aluminiumeffektpigment statt Schritt 1.b aus Beispiel 1 in Ethanol dispergiert und nach Zugabe von Tetraethoxysilan, Wasser und Ammoniak als Katalysator in an sich bekannter Weise mittels eines Sol-Gel-Prozesses mit SiO₂ beschichtet. Anschließend wurde Dynasilan 9116 (C16-Alkylsilan) als leafing Additiv hinzugegeben (3 Gew.-% bezogen auf Aluminiumpigment). Der SiO₂-Gehal des beschichteten Pigments betrug 10 Gew.-%.

Tabelle 6 enthält Vergleichsbeispiele. Bei den Vergleichsbeispielen 1 und 2 wurde statt eines PVD-Aluminiumeffektpigments ein sehr dünnes, durch Naßvermahlung hergestelltes

Aluminiumpigment eingesetzt. Beim Vergleichsbeispiel 3 wurde eine PVD-Aluminiumpigmentdispersion (W-52012IL), die noch deutliche Reste eines release-coats enthielt, verwendet. Dieses Pigment wurde nicht mit einem leafing Additiv behandelt. Die Reste des realease-coats bewirken einen non leafing Effekt.
Die Vergleichsbeispiele 4, 5 und 6 sowie die erfindungsgemäßen Beispiele 12 bis 14 bildeten bei gleicher grundsätzlicher Zusammensetzung eine Versuchsreiche, bei der lediglich über die Konzentration von Lösemittel die Viskosität variiert wurde.

Ferner wurden die Druckfarben des erfindungsgemäßen Beispiels 6 auf unterschiedlichsten Substraten verdruckt. Die Ergebnisse sind in Tabelle 7 dargestellt.

### II Herstellung der Andrucke sowie ihre optische Charakterisierung:

### 11.1 Präparation der Andrucke mittels Prüfbau MZ II Mehrzweck-Probedruckmaschine (Fa. Prüfbau, Typ: MZ II)

### A Probeandruck der Metallic Druckfarbe ohne Primer

### Vorbereitung:

Das Substrat wurde auf den Druckprobenträger geklebt und der Anpressdruck der Druckwerke auf 600 N eingestellt. Die Antriebswalzen wurden auf 23°C temperiert

### Durchführung:

300 mg der Farbe wurden auf das erste Feld der Einfärbewalze aufgetragen. Durch Auflegen auf die zwei rotierenden Antriebswalzen verteilte sich die Farbe über diese. Nach 30 Sekunden wurde die Gummituchdruckform auf die Einfärbewalze aufgelegt und diese wurde nun innerhalb von 60 Sekunden eingefärbt.
Für den Druckvorgang wurde anschließend die Gummituchdruckform auf die dafür vorgesehene Halterung des Druckwerkes 1 gesteckt und der Druckprobenträger mit dem Substrat wurde in die dafür vorgesehene Laufbahn gelegt. Der Druckversuch erfolgte mit einer Druckgeschwindigkeit von 0,5 m/s.
Für alle Versuche der erfindungsgemäßen Beispiele 1 bis 13 und der Vergleichsbeispiele 1 bis 9 (siehe Tabellen 4 und 5) wurden als Substrate Etikettenpapier (Profigloss Bilderdruck 100g/m²) verwendet.

### B Probeandruck des Primers und der Metallic Farbe

Die Vorbereitung erfolgte wie unter A.

### Durchführung:

200 mg des Primers wurden auf das erste Feld der Einfärbewalze aufgetragen, 300 mg der Farbe wurden auf das zweite Feld der Einfärbewalze aufgetragen.
Anschließend wurde die Einfärbewalze auf die zwei Antriebswalzen gelegt und deren Rotation durch betätigen des Starthebels gestartet. Der Primer und die Farbe verteilten sich nun über die drei Walzen.
Nach einer Verreibezeit von 30 Sekunden wurden die Gummituchdruckformen auf die Einfärbewalze aufgelegt und innerhalb von 60 Sekunden eingefärbt.
Für den Druckvorgang wurden anschließend die beiden Gummituchdruckformen auf die dafür vorgesehene Halterung der beiden Druckwerke gesteckt, die Druckform mit Primer auf das Druckwerk 1, die Druckform mit Farbe auf das Druckwerk 2, der Druckprobenträger mit dem Substrat wurde in die dafür vorgesehene Laufbahn gelegt und der Probedruck erstellt (Druckgeschwindigkeit: 0,5 m/s).

Es wurden für die diversen Versuche zwei verschiedene Primer verwendet:
Primer 1: Huber group Lack TD Spez. 877894 (Wasserprimer)
Primer 2: Huber group Inkredible CRS MAX Transparentweiß 40N0550

### II.2 Glanzmessungen:

Die Glanzmessungen der Probeandrucke wurden mittels eines micro-TRI-gloss (Fa. Byk-Gardner) durchgeführt._Die Messungen erfolgten bei einem Glanzwinkel von 60°. Es wurde an fünf verschiedenen Stellen des Probedruckes gemessen. Die in Tabelle 4 angegebenen Werte sind die hieraus gebildeten Mittelwerte.

### II. 3 Bestimmen der Farbdichte des Probeandruckes mittels des Geräts SpectroDens (Fa. TECHKON)

Das Spektral-Densitometer besitzt vier CMYK-Farbfilter. Bei einer Messung wurden für alle vier Farbfilter die Werte der Farbdichte gemessen. Für die Messung von Metallic Farben des Farbtones Silberwurde der Wert für den Farbfilter C verwendet. Die Messung wurde an mindestens drei Stellen auf der Probe wiederholt und jeweils der Mittelwert verwendet. Die Kalibrierung auf Papierweiß erfolgte am verwendeten unbedruckten Substrat.

### II.4 Bestimmen des Lustre Wertes mit Hilfe des Farbmessgeräts X-Rite SP64:

Der anteilige Unterschied zwischen Streulicht und Totalreflexion ist ein Maß für die visuelle Beurteilung der Brillanz, Abbildschärfe und Milchigkeit des Spiegeleffektes
Das Farbmessgerät weist eine Kugelgeometrie und eine Glanzfalle auf, was eine Messung von SPEX und SPIN erlaubt.
Der SPIN Wert gibt hierbei die Gesamtmenge des reflektierenden Lichtes in alle Raumrichtungen entsprechend der Kugelgeometrie an, wohingegen bei der SPEX Messung die Glanzfalle hinzugeschaltet wird und nur das verbleibende Streulicht gemessen wird. Die Differenz der beiden Werte ergibt den Lustre Wert und somit den Wert, wieviel Anteil des eingestrahlten Lichtes in der Totalreflexion reflektiert wird und damit den Effekt eines Spiegels darstellt. Je höher also der Lustre Wert (und daher: je geringer der SPEX-Wert und je höher der SPIN Wert) ist, umso klarer ist der Spiegeleffekt und damit die Abbildeschärfe.

Zur Kalibration wurde ein Schwarz und Weiß Abgleich durchgeführt. Gemessen wurden der SPIN und der SPEX Wert an jeweils 5 Stellen des Andruckes und hieraus wurde der Mittelwert gebildet. Es wurden die Andrucke B mit Primer vermessen.

### II.5 Visuelle Beurteilung:

Zusätzlich zu den gemessenen Größen wurde der visuelle Gesamteindruck der Andrucke im Hinblick auf den Spiegeleffekt anhand eines Notensystems (Note 1: sehr gut, Note 2: gut, Note 3: befriedigend, Note 4: nicht mehr ausreichend, Note 5: mangelhaft) beurteilt. Es zeigte sich, dass die verschiedenen Maßzahlen nicht den Gesamteindruck für das menschliche Auge wiedergeben vermochten.

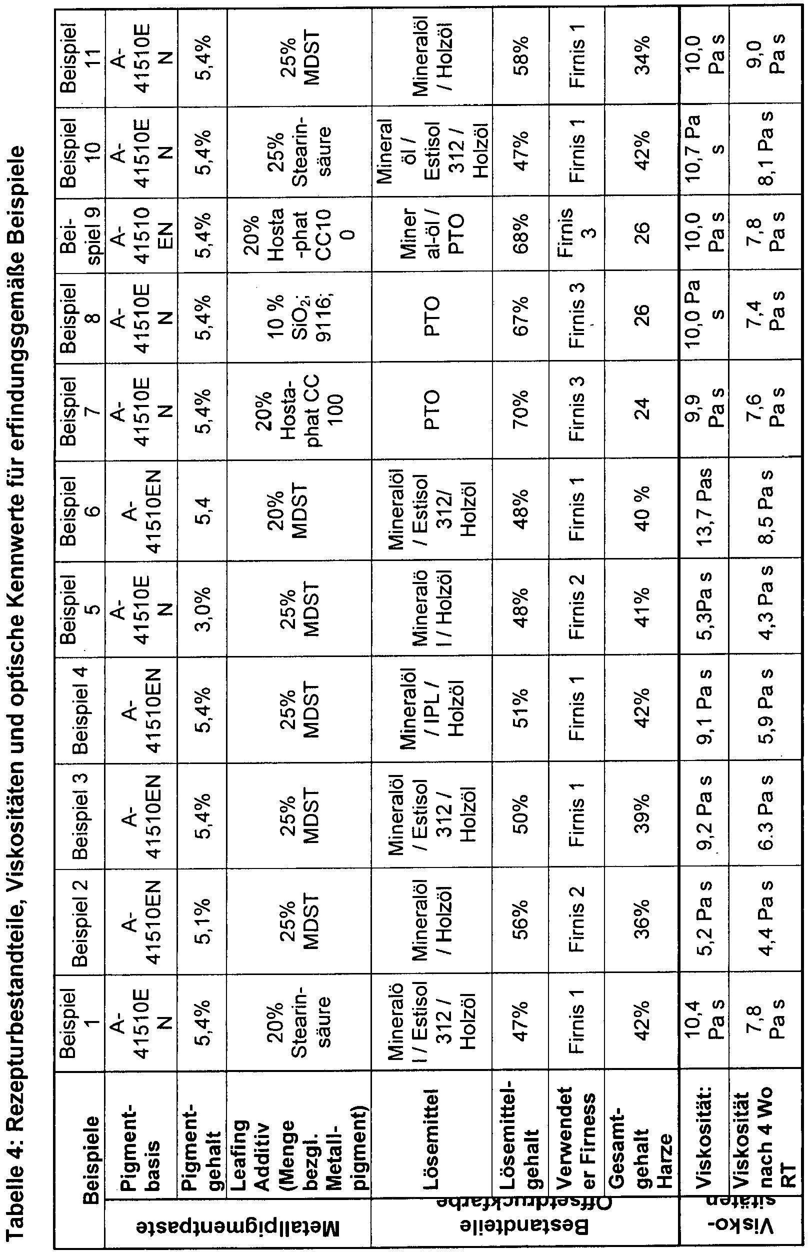

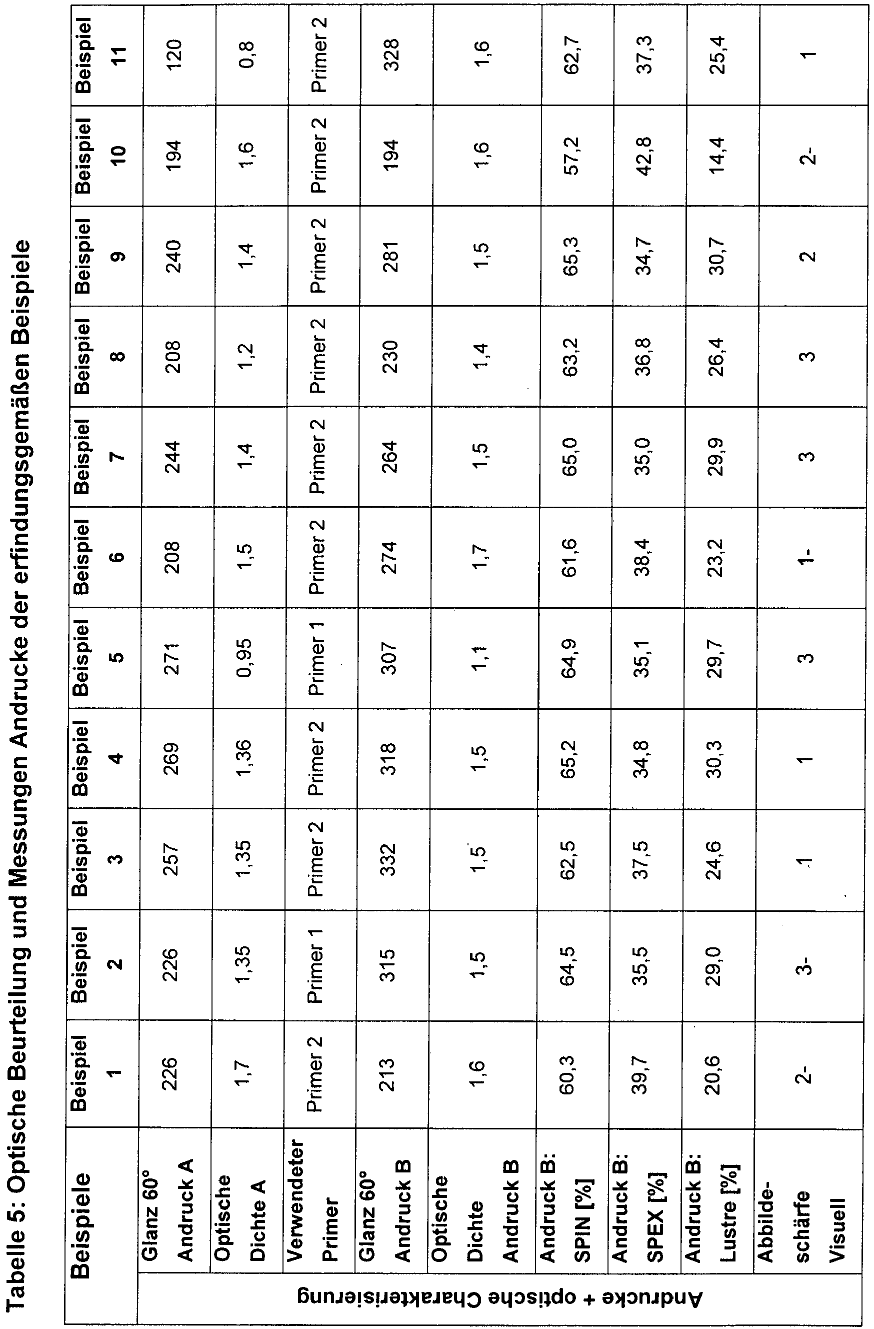

### III Interpretation:

### III.1 Erfindungsgemäße Beispiele (Tabellen 4 und 5):

Als beste erfindungsgemäße Beispiele erwiesen sich die Beispiele 3, 4, 11 und 6. Bei allen Beispielen waren im Andruck B recht hohe optische Dichten und hohe Glanzwerte zu beobachten. Der Lustre-Wert korrelierte nicht immer zu den visuellen Beurteilungen des Spiegelglanzeffekts. Die visuell am geringsten bewerteten Versuch waren die Beispiele 2 und 5. Bei diesen Versuchen wurde als Primer ein Wasserprimer eingesetzt, der offenbar weniger verträglich zur erfindungsgemäßen Offsetdruckfarbe war als der konventionelle Primer 1. Die visuell ebenfalls mit Note 3 bewerteten Beispiele 7 und 8 waren mit Firnis 3 formuliert, der einen sehr hohen Lösemittelgehalt und einen sehr niedrigen Bindemittelgehalt aufwies. Dieses nicht ideal ausgewogene Bindemittel- / Lösemittelverhältnis kann die Orientierung der Aluminiumpigmente und damit die Glanzbildung bereits negativ beeinflussen. Bei Beispiel 5 ist der verhältnismäßig niedrige visuelle Beurteilung wohl vor allem auf die niedrige optische Dichte zurückzuführen. Diese wiederum dürfte in erster Linie auf die verhältnismäßig geringe Aluminiumpigmentkonzentration zurückzuführen sein. Gemessen wurde für diese Probe zwar hohe Glanz- und Lustrewerte, jedoch macht sich die schlechtere optische Dichte im optischen Gesamteindruck bemerkbar.
Aller erfindungsgemäßen Beispiele wiesen jedoch einen Spiegelglanz auf, der zuvor noch nicht in konventionellen metallpigmentierten Offsetdruckfarben erreicht wurde.

### III. 2 Vergleichsbeispiele (Tabelle 6):

Die beiden ersten Vergleichsbeispiele verwendeten ein naßvermahlenes Aluminiumpigment anstatt eines PVD-Pigments. Die Glanz- und Lustrewerte sowie die visuelle Beurteilung fallen drastisch schlechter aus als bei allen erfindungsgemäßen Beispielen. Ähnlich schlechte Ergebnisse wurden für das Vergleichsbeispiel 3 mit einem non leafing Pigment erhalten.

Bei der Variation der Viskosität konnte man mit steigender Viskosität einen Abfall des Spiegeleffektes (Glanz- und Lustrewerte sowie die visuelle Beurteilung) erkennen.Die höchsten Werte erhielt das Vergleichsbeispiel 4. Allerdings war bei dieser niedrigviskosen Druckfarbe (Viskosität: 2,2 Pa s) bereits ein unerwünschtes "Nebeln" zu erkennen. Auch die Wischfestigkeit und Punktschärfe bei feinen Detailelementen wurde ersichtlich.

Bei den Vergleichsbeispielen 5 und 6 waren trotz noch relativ guter Glanz- und Lustrewerte in der visuellen Beurteilung war eindeutig ersichtlich, dass die Abbildeschärfe durch eine deutlich zunehmende Milchigkeit des Spiegels und damit der Spiegeleffekt nicht mehr ausreichend war, um als erfindungsgemäße Beispiele zu gelten. Die hohen Viskositäten scheinen hier eine optimale Orientierung der plättchenförmigen Aluminiumpigmente im Andruck zu verhindern.

### III.3 Variation der Substrate:

Getestet wurde auf verschiedenen Papier und Kartonsubstraten.

Bei den Papiersubstraten handelte es sich um relativ vergleichbare Qualitäten, aus Frischfaser hergestellt, gebleicht und gestrichen.

Die verwendeten Qualitäten bei den Kartonsubstraten reichen von Recycling bis gebleichtem Frischfaserkarton. Die Versuche mit gebleichtem, gestrichenen Frischfaserkarton sind von links nach rechts optisch hochwertiger, da sie von ihrer Oberflächenstruktur her glatter werden und andererseits das Lösemittel wegschlagen kann und eine oxidative Trocknung in einem gut balancierten Verhältnis stattfindet., Dies führt zu einer guten Orientierung der Aluminiumpigmente. Der Druckversuch auf dem hochwertigsten Substrat (Chromalux) führte zu einem extrem guten Spiegelglanz, der in dieser ausgeprägten Form im Offsetdruck bislang noch nicht erreicht wurde.

Die aufgrund ihrer sehr rauen Oberflächenstrukturen am wenigsten geeignete Substrate (Frischfaser: Sappi GZ; Recycling: Mayr-Melnhof Mirabell) : erzeugte einen unerwartet erstaunlichen Metalleffekt. Zwar ist die Abbildeschärte mit zunehmendem Abstand zum Druckobjekt durch die Oberflächenstruktur abgeschwächt, erzeugt aber einen diffusen, nicht milchigen Spiegel. So kann ein bisher unerreichter, erstaunlichen Metalleffekt erzielt werden, der so vorher nicht auf diesen Substraten zu erreichen war. Hierbei war die raue Struktur des Substrats noch sichtbar, erhält durch die Metallpigmentbedruckung mit der erfindungsgemäßen Druckfarbe jedoch einen bisher unbekannten gedruckten optischen Effekt.

**Tabelle 6: Rezepturbestandteile, Viskositäten und optische Kennwerte für Vergleichsbeispiele sowie Viskositätsvariation**

| | | | | **Versuchsreihe Variation Viskosität** | | | | | |
|---|---|---|---|---|---|---|---|---|---|
| **Beispiel / Vergleichsbeispiel** | Vergleichsbeispiel 1 | Vergleichsbeispiel 2 | Vergleichs -beispiel 3 | Vergleichs -beispiel 4 | Beispiel 12 | Beispiel 13 | Beispiel 14 | Vergleichsbeispiel 5 | Vergleichs -beispiel 6 |
| **Pigmentbasis** | PLATIN-VARIO AE-82001 (Fa. Eckart GmbH) | PLATIN-VARIO AE-82001 | W-52012IL* | A-41510 EN | A-41510EN | A-41510E N | A-41510EN | A-41510EN | A-41510EN |
| **Pigmentgehalt [%]** | 5,4 | 5,4 | 5,2 | 5,7 | 6,1 | 6,4 | 6,5 | 6,9 | 7,1 |
| **Leafing Additiv** | 25% MDST | 20% MDST | | 25% MDST | 25% MDST | 25% MDST | 25% MDST | 25% MDST | 25% MDST |
| **Lösemittel** | Mineralöl / Estisol 312 Holzöl | Mineralöl / Estisol 312 / Holzöl | PTO / Holzöl | Mineralöl / Holzöl | Mineralöl / Holzöl | Mineral öl / Holzöl | Mineralöl / Holzöl | Mineralöl / Holzöl | Mineralöl / Holzöl |
| **Lösemittelgehalt** | 44 | 44 | 65 | 52 | 48 | 45 | 44 | 41 | 39 |
| **Harzzusammensetzung** | Firnis 1 | Firnis 1 | Firnis 3 | Firnis 2 | Firnis 2 | Firnis 2 | Firnis 2 | Firnis 2 | Firnis 2 |
| **Gesamtgehalt Harze** | 42 | 42 | 29 | 32 | 34 | 35 | 36 | 38 | 48 |
| **Viskosität:** | 11,7 Pa s | 11,7 Pa s | 11 Pa s | 2,2 Pa s | 5,5 Pa s | 8,1 Pa s | 11,4 Pa s | 21,4 Pa s | 34,5 Pa s |
| **Glanz 60°** | 101 | 112 | 53 | 179 | 157 | 171 | 163 | 154 | 141 |
| **optische Dichte** | 1,1 | 1,1 | 0,9 | 1,6 | 1,2 | 1,2 | 1,3 | 1,3 | 1,3 |
| **Primer** | Primer 2 | Primer 2 | Primer 2 | Primer 2 | Primer 2 | Primer 2 | Primer 2 | Primer 2 | Primer 2 |
| **Glanz 60° auf Primer** | 121 | 121 | 81 | 311 | 309 | 296 | 277 | 221 | 190 |
| **optische Dichte auf Primer** | 1,25 | 1,2 | 0,8 | 1,9 | 1,9 | 1,9 | 1,8 | 1,65 | 1,6 |
| **SPIN mit Primer [%]** | 55,8 | 55,88 | 57,3 | 66,5 | 66,2 | 65,6 | 65,5 | 61,5 | 60,7 |
| **SPEX mit Primer [%]** | 44,2 | 44,12 | 42,7 | 33,5 | 33,8 | 34,4 | 334,5 | 38,5 | 39,3 |
| **Lustre mit Primer [%]** | 11,6 | 11,76 | 14,6 | 33,0 | 32,4 | 31,2 | 30,9 | 23,0 | 21,3 |
| **Abbildeschärfe Visuell** | 5 | 5 | 5 | 1 | 1- | 2 | 3 | 4 | 4- |

**Tabelle 7: Druckfarbe in Anlehnung an Beispiel 6 verdruckt auf unterschiedlichsten Substraten**

| | **Gebleichte Frischfaser, gestrichen** | | | **Recycling Karton, Doppelstrich** | **Frischfaserkarton, gebleicht, gestrichen** | | | |
|---|---|---|---|---|---|---|---|---|
| **Optische Beurteilung / Substrate** | Profigloss Bilderdruck 100 g/m² | Perfect B Super 75 g/m² | WSHG 5 | Mayr-Melnhof Mirabell GD2 300 g/m² | Sappi GZ 280 g/m² | Invercote T 240 g/m² | Truecard Ice 300 g/m² | Chromalux |
| **Glanz 60° Andruck A** | 208 | 186 | 183 | 175 | 191 | 259 | 171 | 228 |
| **Optische Dichte Andruck A** | 1,5 | 1,2 | 1,1 | 1,5 | 1,6 | 1,6 | 1,1 | 1,1 |
| **Glanz 60° Andruck B** | 274 | 233 | 263 | 200 | 186 | 232 | 247 | 238 |
| **Optische Dichte Andruck AB** | 1,7 | 1,6 | 1,7 | 1,6 | 1,7 | 1,7 | 1,7 | 1,5 |
| **Andruck B: SPIN (%)** | 61,59 | 61,76 | 62,2 | 60,47 | 61,43 | 62,11 | 63,39 | 62,93 |
| **Andruck B: SPEX(%)** | 38,41 | 38,24 | 37,8 | 39,53 | 38,57 | 37,89 | 36,61 | 37,07 |
| **Andruck B: Lustre mit Primer (%)** | 23,18 | 23,52 | 24,4 | 20,94 | 22,86 | 24,22 | 26,78 | 25,86 |
| **Andruck B: Spiegeleffekt Visuell** | 1- | 2 | 1- | 3 | 3 | 2 | 1 | 1+ |

## Patentansprüche

1. Offsetdruckfarbe enthaltend plättchenförmige Aluminiumpigmente mit einer mittleren Dicke h₅₀ aus einem Bereich von 15 bis 80 nm sowie Bindemittel und Lösemittel,
**dadurch gekennzeichnet,**
**dass** die plättchenförmigen Aluminiumpigmente durch PVD-Verfahren hergestellt werden und mindestens teilweise mit einem leafing Additiv beschichtet sind und dass die Offsetdruckfarbe eine Viskosität von 4 bis 15 Pa s, gemessen an der auf 25°C temperierten Probe mit Hilfe eines Rotationsviskosimeter mit einer Kegel-Platte-Geometrie bei einer Schubspannung von 185,9 Pa, aufweist.

2. Offsetdruckfarbe nach Anspruch 1,
**dadurch gekennzeichnet,**
**dass** der Lösemittelgehalt in einem Bereich von 40 - 72 Gew.-%, bezogen auf die gesamte Offsetdruckfarbe, liegt.

3. Offsetdruckfarbe nach einem der beiden Ansprüche 1 oder 2,
**dadurch gekennzeichnet,**
**dass** das Lösemittel der Gruppe bestehend aus Mineralölen, Pflanzenölen und Fettsäureestern oder Mischungen daraus, entnommen ist, wobei die Pflanzenöle nicht ohne mindestens eines der jeweils anderen beiden Lösemittel verwendet werden.

4. Offsetdruckfarbe nach einem der vorstehenden Ansprüche,
**dadurch gekennzeichnet,**
**dass** die Viskosität in einem Bereich von 4,1 bis 12 Pa s liegt.

5. Offsetdruckfarbe nach einem der Ansprüche 1 bis 3,
**dadurch gekennzeichnet,**
**dass** die Viskosität in einem Bereich von 4,0 bis 9,2 Pa s liegt.

6. Offsetdruckfarbe nach einem der vorstehenden Ansprüche,
**dadurch gekennzeichnet,**
**dass** das leafing Additiv eine organische Phosphor-haltige Verbindung ist, die
a) Phosphorsäuren oder Phosphorsäureester mit der allgemeinen Formel (I)
(O)P(OR¹)(OR²)(OR³) (I)
und/oder
b) Phosphonsäuren oder Phosphonsäureester der allgemeinen Formel (II)
(O)PR⁴(OR¹)(OR²) (II)
und/oder
c) Phosphinsäure oder Phosphinsäureester der allgemeinen Formel (III)
(O)PR⁴R⁵(OR¹) (III)
ist, wobei
- R¹, R² und R³ unabhängig voneinander H oder eine verzweigte oder unverzweigte Alkyl-, Aryl-, Alkylaryl-, Arylalkylgruppe mit 1 bis 30 C-Atomen ist, die optional Heteroatome wie O, S, und/oder N enthält, mit der Maßgabe, dass im Fall einer Verbindung der Formel (I) mindestens einer dieser Reste eine verzweigte oder unverzweigte Alkyl-, Aryl-, Alkylaryl-, Arylalkylgruppe mit 8 bis 30 C-Atomen ist,
- R⁴ und R⁵ unabhängig voneinander eine verzweigte oder unverzweigte Alkyl-, Aryl-, Alkylaryl-, Arylalkylgruppe mit 8 bis 30 C-Atomen ist, die optional Heteroatome wie O, S,
und/oder N enthält,
oder
eine Verbindung der allgemeinen Formel (IV)
R⁶-X (IV)
ist, wobei R⁶ ein aliphatischer, bevorzugt unverzweigter, Alkylrest mit 12 bis 30 C-Atomen ist und wobei X eine Carboxylgruppe oder eine Carboxylatgruppe, eine Aminogruppe oder ein Trialkoxysilan ist.

7. Offsetdruckfarbe nach Anspruch 5,
**dadurch gekennzeichnet,**
**dass** für das leafing Additiv R⁴, R⁵ und R⁶ unabhängig voneinander eine verzweigte oder unverzweigte Alkyl-, Aryl-, Alkylaryl-, Arylalkylgruppe mit 14 bis 20 C-Atomen ist.

8. Offsetdruckfarbe nach Anspruch 5,
**dadurch gekennzeichnet,**
**dass** das leafing Additiv
i) eine Phosphonsäure ist, wobei R¹= R²= H und R⁴ eine verzweigte oder unverzweigte Alkyl-, Aryl-, Alkylaryl-, Arylalkylgruppe mit 8 bis 18 C-Atomen ist
oder
ii) ein Phosphorsäureester ist, wobei mindestens einer der Reste R¹, R², R³ eine verzweigte oder unverzweigte Alkylgruppe mit 8 bis 18 C-Atomen ist
oder
iii) eine Carbonsäuren gemäß Formel (IV) ist, die der Gruppe bestehend aus Stearinsäure, Ammoniumstearat, Alkalistearat, Erdalkalistearat oder Mischungen hiervon, entnommen wird.

9. Offsetdruckfarbe nach einem der vorstehenden Ansprüche,
**dadurch gekennzeichnet,**
**dass** die Pigmentierungshöhe des Aluminiumpigments 2 bis 8 Gew.-%, bevorzugt 2,5 bis 6 Gew.-% beträgt, jeweils bezogen auf das Gesamtgewicht der Offsetdruckfarbe.

10. Offsetdruckfarbe nach einem der vorstehenden Ansprüche,
**dadurch gekennzeichnet,**
**dass** das Bindemittel der Gruppe bestehend aus Alkydharze, modifizierte Kolophoniumharze, Maleinatharze, aromatische Kohlenwasserstoffharze, modifizierte Kohlenwasserstoffharze, Allylester mehrwertiger organischer Säuren, Polyallylether und deren Mischungen, entnommen wird.

11. Offsetdruckfarbe nach einem der vorstehenden Ansprüche,
**dadurch gekennzeichnet,**
**dass** die Offsetdruckfarbe weitere Additive der Gruppe bestehend aus Trockenmittel, Wachse, Filmbildehilfsmittel, Dispergierhilfsmittel, Antioxidantien und deren Mischungen, entnommen wird, enthält.

12. Verfahren zur Herstellung einer Offsetdruckfarbe nach den Ansprüchen 1 bis 11,
**dadurch gekennzeichnet,**
**dass** das Verfahren folgende Schritte umfaßt:
a) Bereitstellen eines Offsetfirnises durch Vermischen und Erhitzen von Bindemitteln und Lösemitteln,
b) Bereitstellen einer Paste mit PVD-Aluminiumeffektpigmenten, die eine mittlere Dicke h₅₀ von 15 bis 80 nm aufweisen und mit einem leafing Additiv beschichtet sind
c) Zugabe weiterer Lösemittel und optional weiterer Additive zum Firnis a) sowie Vermischen mit der PVD-Aluminiumpigmentpaste b)
d) Einstellen der Viskosität in einem Bereich von 4 bis 15 Pa s, wobei die Viskosität bevorzugt durch Zugabe von Lösemittel eingestellt wird und wobei die Viskosität an der auf 25°C temperierten Probe mit Hilfe eines Rotationsviskosimeter mit einer Kegel-Platte-Geometrie bei einer Schubspannung von 185,9 Pa gemessen wird,
d) optional Altern der Offsetdruckfarbe, bis sie eine Viskosität in einem Bereich von 4,0 bis 12 Pa s erreicht hat.

13. Bedrucktes Substrat mit metallischem Spiegelglanz, umfassend
a) optional eine Primerschicht A
b) eine durch Offsetdruck aufgebrachte Schicht B unter Verwendung einer Offsetdruckfarbe nach einem der Ansprüche 1 bis 11, die gegebenenfalls auf der Primerschicht A aufgebracht ist,
c) optional weitere Farbschichten C.

14. Bedrucktes Substrat mit metallischem Spiegelglanz nach Anspruch 13,
**dadurch gekennzeichnet,**
**dass** auf dem Substrat eine Primerschicht aufgebracht ist.

15. Bedrucktes Substrat mit metallischem Spiegelglanz nach einem der Ansprüche 13 oder 14,
**dadurch gekennzeichnet,**
**dass** der Primer eine Lasurschicht ist.

16. Bedrucktes Substrat mit metallischem Spiegelglanz nach einem der Ansprüche 13 bis 15,
**dadurch gekennzeichnet,**
**dass** eine weitere Farbschicht C aufgebracht wird, die transparent ist oder Buntpigmente enthält.

17. Verfahren zur Herstellung eines bedruckten Substrats mit metallischem Spiegelglanz nach Anspruch 13,, umfassend die folgende Schritte:
a) optional Aufbringen eines Primers auf dem Substrat
b) Aufbringen einer Offsetdruckfarbe nach einem der Ansprüche 1 bis 11 auf die Primerschicht oder auf dem Substrat unter Ausbildung einer hochglänzenden Druckschicht B
c) optional Aufbringen weiterer Farbschichten C auf die Schicht B.

18. Verfahren zur Herstellung eines hochglänzenden metallischen Druckbildes nach Anspruch 17,
**dadurch gekennzeichnet**,
das als erster Schritt a), dem Aufbringen der hochglänzenden Druckschicht B ein Primer aufgebracht wird.

19. Verfahren nach einem der Ansprüche 17 oder 18;
**dadurch gekennzeichnet, dass** die Schicht B nur einmal in einem Druckvorgang aufgebracht wird.

20. Verfahren zur Herstellung eines hochglänzenden metallischen Druckbildes nach einem der Ansprüche 17 bis 19;
**dadurch gekennzeichnet, dass** das Aufdrucken der Farbschicht C mittels eines Offsetfarbwerks oder eines anschließenden Flexofarbwerks inline in einem Druckdurchgang erfolgt oder dass die Farbschicht C auch durch ein beliebiges anderes Druckverfahren im offline-Modus in einem zweiten Druckdurchgang nach Trocknung des ersten Drucks aufgebracht wird.
